# EUROPÄISCHE PATENTANMELDUNG

(11) **EP 2 521 233 A2**
(43) Veröffentlichungstag der Anmeldung: **07.11.2012**
(21) Anmeldenummer: 12002287.6
(22) Anmeldetag: 29.03.2012
(51) Int. Cl.: H02G 3/10, H02G 3/14

(54) **Montageteil für aufputz-, unterputz-und/oder hohlraummontagefähige Einsätze**

(30) Priorität: 02.05.2011 DE 102011050048
(71) Anmelder: Dorma GmbH&Co. KG, 58256 Ennepetal (DE)
(72) Erfinder: Hellwig, Alexander, 58256 Ennepetal (DE); Wulbrandt, Tim, 58332 Schwelm (DE)

(57) **Zusammenfassung**

Ein Montageteil (40) ist gestaltet, mit einer ersten Befestigungsvorrichtung (42 - 44, 56) an einem Tragring (60) eines Einsatzes (1) ortsfest angebracht zu werden. Der Tragring (60) ist an einer Unterputzdose (10) und/oder einem Aufputzgehäuse ortsfest anbringbar gestaltet. Das Montageteil (40) ist ferner gestaltet, mit einer zweiten Befestigungsvorrichtung (46 - 48) an einer korrespondierenden Befestigungsvorrichtung (31, 32) einer Komponente (30) ortsfest angebracht zu werden. Die Komponente (30) ist gestaltet, an einem korrespondierend ausgebildeten Tragring befestigt zu werden, der ebenfalls gestaltet ist, Unterputz und/oder Aufputz montiert zu werden.

Ein damit versehener Einsatz (1) umfasst einen Tragring (60) und eine auf bzw. in den Tragring (60) ortsfest auf- bzw. einsetzbare Abdeckung (20). Das Montageteil (40) ist über seine Außenkontur (59) (42 - 44, 56) an der Innenkontur (64, 66, 68) des Tragrings (60) ortsfest angebracht. Der Einsatz (1) umfasst eine Aufputz bzw. Unterputz montierbare Komponente (30). Die Komponente (30) ist von der Innenkontur (46 - 48) des Montageteils (40) ortsfest gehaltert.

Ein Verfahren zum Montieren solch eines Einsatzes (1) umfasst als erste Schritte (S2, S3) das ortsfeste Anbringen der Komponente (30) des Einsatzes (1) am Montageteil (40) und das Einschieben des Montageteils (40) in den Tragring (60) sowie Fixieren am Tragring (60). Danach wird dieses Modul (30, 40, 60) in Schritt (S4) an einer Unterputzdose (10) bzw. einem Aufputzgehäuse angebracht. In Schritt (S5) wird die Abdeckung (20) auf bzw. in dem Tragring (60) oder am Montageteil (40) ortsfest angebracht.

## Beschreibung

Die Erfindung betrifft ein Montageteil für Einsätze, die vorgesehen sind, Aufputz, Unterputz oder gar in Hohlräume beispielsweise von Rahmenprofilen montiert zu werden.

Derartige Einsätze sind bekannt. Sie bestehen im Wesentlichen aus einer Auf- bzw. Unterputz bzw. in einen Hohlraum einsetzbare, also an einem Tragring zu montierenden Komponente, wie einem Schalter, einer Steckdose oder dergleichen, ebenjenem Tragring, an dem diese Komponente befestigt wird, und einer Abdeckung, die die Anordnung aus Komponente und Tragring an der der Komponente abgewandten Seite des Tragrings optisch verdeckt. Die Anordnung Tragring und Komponente ist an einer Unterputzdose bzw. einem Aufputzgehäuse entweder über an der Komponente bzw. am Tragring vorgesehene Klemmschrauben oder aber über direktes Festschrauben des Tragrings an der Dose bzw. dem Gehäuse fixiert. Die Abdeckung kann einteilig ausfallen oder aus einem Innenteil und einem dieses umschließenden Rahmenteil bestehen. Im ersten Fall ist die Abdeckung selbst an der Komponente fixiert. Im zweiten Fall ist das Rahmenteil auf den Tragring aufgelegt, und das Innenteil ist auf dem Rahmenteil abgelegt und am Tragring beispielsweise mittels Verschraubens befestigt bzw. von diesem gehalten. Das Innenteil fixiert dabei das Rahmenteil am Tragring. Solchen Abdeckungen liegen hauptsächlich optische Aspekte zugrunde. Sie sind hinsichtlich Farb- und Formgestaltung an die jeweils gewünschte optische Wirkung angepasst. Ihnen liegt als ein technischer Aspekt die Befestigung der Abdeckung am sonstigen Einsatz zugrunde. Als zusätzlicher technischer Aspekt kann auch die Anschließbarkeit eines Kabels an eine Anschlusskomponente, die Betätigung einer Schalterkomponente und dergleichen eine Rolle spielen. D. h. jede Abdeckung ist auf den jeweiligen Tragring und gegebenenfalls auch auf die Komponente des zugehörigen Einsatzes abgestimmt.

Dies führt dazu, dass Abdeckungen ein und desselben Herstellers für Komponenten unterschiedlicher Art unterschiedlich ausfallen, sei es bezüglich ihrer optischen Gestaltung und/oder der Art und Weise ihrer Befestigung bzw. etwaiger zusätzlicher technischer Aspekte.

Bei Einsätzen verschiedener Hersteller mit Komponenten der gleichen Art, wie beispielsweise Schalterkomponenten mit der gleichen Funktion, können sich diese Komponenten derart voneinander unterscheiden, dass die Tragringe und/oder Abdeckungen zueinander unterschiedlich ausgebildet sind und damit nicht gegeneinander ausgetauscht werden können, also inkompatibel zueinander sind.

Ein weiterer Nachteil ergibt sich aus folgender Situation. Hersteller A hat eine Komponente im Programm, die ein anderer Hersteller B nicht im Programm hat. Hersteller B hat aber nun eine Abdeckung im Programm, die funktional zur Komponente des Herstellers A passen könnte, und die einer Person besser gefällt als die Abdeckung von Hersteller A. Nun können die Abdeckungen beider Hersteller zueinander inkompatibel sein, sodass sich die Abdeckung von Hersteller B nicht auf den Tragring bzw. die Komponente von Hersteller A montieren lässt. Dies ist ein nicht zufrieden stellender Zustand.

Ein weiterer Nachteil kann entstehen, wenn die Abdeckung beschädigt wird und vom Hersteller weder eine baugleiche noch eine damit kompatible Abdeckung mit gleichem Aussehen angeboten wird. In dem Fall müsste der gesamte, im Gesamten wesentlich kostenintensivere Einsatz ausgetauscht werden. Hat sich beim Hersteller zudem das Aussehen bzw. Design der Abdeckungen geändert, ergibt sich der Nachteil, dass die im Haus verbauten Abdeckungen nicht mehr einheitlich aussehen.

Muss die Komponente funktionsbedingt ausgetauscht werden, ergeben sich ähnliche Probleme.

Die DE 37 38 776 A1 offenbart einen Einsatz, der zum Zweck der Installation in Brüstungskanälen mit einem Adapterring ausgestattet ist. Der Adapterring ist in einen Tragring verrastend eingesetzt. Eine Abdeckung ist vorgesehen, die im Wesentlichen aus einem Innenteil und einem Abdeckrahmen besteht. Das Innenteil beispielsweise in Form eines Steckdoseneinsatzes ist auf die eigentliche Komponente aufgeschraubt. Der Abdeckrahmen ist auf den Adapterring aufgesetzt und an diesem befestigt. Das Innenteil ist innenseitig auf dem Adapterring abgestützt und an der zugehörigen Komponente befestigt. D. h. der Adapterring hat eine Doppelfunktion, nämlich das Halten sowohl des Abdeckrahmens als auch des Innenteils.

Mit dieser Anordnung ist es zwar möglich, zueinander inkompatible Teile einer Abdeckung an einem sonstigen Einsatz zu montieren, aber eben nicht zueinander inkompatible Tragringe und Komponenten.

Aufgabe der Erfindung ist es, die Nachteile des Standes der Technik zu vermeiden.

Diese Aufgabe wird durch den Gegenstand der Ansprüche 1, 8 und 11 gelöst. Vorteilhafte Weiterbildungen der Erfindung sind in den Unteransprüchen angegeben.

Ein erfindungsgemäßes Montageteil ist gestaltet, mit einer ersten Befestigungsvorrichtung an einem Tragring eines Einsatzes ortsfest angebracht zu werden. Der Tragring ist dabei gestaltet, Unterputz und/oder Aufputz montiert zu werden. Er ist also ausgebildet, in bekannter Weise an einer Unterputzdose und/oder einem Aufputzgehäuse ortsfest angebracht zu werden. Das Montageteil ist ferner gestaltet, mit einer zweiten Befestigungsvorrichtung an einer korrespondierenden Befestigungsvorrichtung einer Komponente ortsfest angebracht zu werden, die gestaltet ist, an einem korrespondierend ausgebildeten Tragring befestigt zu werden, der ebenfalls gestaltet ist, Unterputz und/oder Aufputz montiert zu werden. Durch das Vorsehen verschiedener Befestigungsvorrichtungen für den Tragring und die Komponente werden diese hinsichtlich der Befestigung bzw. Montage voneinander entkoppelt. Dies hat den Vorteil, dass die Komponente und der Tragring in Bezug auf die Montage völlig verschieden ausgebildet sein können und dennoch zu einem Einsatz zusammengebaut werden können. Dies ermöglicht insbesondere, eine am Tragring zu befestigende Abdeckung verwenden zu können, die in herkömmlicher Weise nicht mit der Komponente vereinbar bzw. kombinierbar ist. Die Erfindung bietet die Möglichkeit, eine defekte Komponente austauschen zu können, ohne die Abdeckung gleich mit ersetzen zu müssen. Dem Hersteller bietet die Erfindung die Möglichkeit, Abdeckungen mit in der Anzahl weniger verschiedenartigen Befestigungsmöglichkeiten und damit mehr standardisierte Abdeckungen vorzusehen, was sich günstig auf die Entwicklungs- und Herstellungskosten auswirkt. Abgesehen davon können die Abdeckungen getauscht werden, wenn sie nicht mehr gefallen, ohne die Komponenten mit austauschen und damit teuer einkaufen zu müssen.

Das Montageteil ist, in Einschubrichtung des Montageteils in Bezug auf den Tragring bzw. die Komponente gesehen, vorzugsweise gestaltet, mit einer Außenkontur in eine korrespondierende Innenkontur des vorgenannten einen Tragrings eingeschoben zu werden. Das Einschieben ist ein sehr einfacher Montageschritt. Das Montageteil ist ferner gestaltet, kraft-und/oder formschlüssig an der korrespondierenden Innenkontur dieses Tragrings ortsfest angebracht zu werden. Damit ist das Montageteil am Tragring befestigt und bildet mit diesem eine Art Modul. Das Montageteil ist schließlich gestaltet, mit einer Innenkontur die Komponente des vorgenannten Einsatzes kraft- und/oder formschlüssig zu halten. D. h. die Komponente ist nicht mehr am Tragring befestigt, entkoppelt sie somit vom Tragring. Dies ermöglicht, aufgrund lediglich eines zusätzlichen Teils, nämlich des Montageteils, Abdeckungen inklusive des darauf abgestimmten Tragrings mit Komponenten zu kombinieren, die einen Tragring mit völlig anderer Innenkontur erforderten. Damit kann die Abdeckung von einem Hersteller kommen, und die Komponente von einem anderen Hersteller. Einer dieser Hersteller, oder ein dritter, müsste lediglich das Montageteil anbieten, soll eine bestimmte Komponente mit einer bestimmten Abdeckung versehen werden.

Das Montageteil weist an seiner Außenkontur vorzugsweise Befestigungsabschnitte auf. Diese Befestigungsabschnitte sind gestaltet, das Montageteil am Tragring zu fixieren. Das Montageteil weist ferner eine Verdrehsicherung auf. Diese ist gestaltet, ein Verdrehen des Montageteils in Bezug auf den Tragring um eine Achse entlang seiner Längserstreckung zu verhindern. Dies bietet die Möglichkeit, das Montageteil nach dem Zusammen- bzw. Einschieben in den Tragring, also im Montagezustand, zumindest hinsichtlich der Drehposition zu fixieren, was die Montage erleichtert.

Alternativ oder zusätzlich gilt dies für die Innenkontur des Montageteils in Bezug auf die zu haltende Komponente, verbunden mit den gleichen Vorteilen nun hinsichtlich der Montage der Komponente.

Vorzugsweise ist zumindest einer der Befestigungsabschnitte des Montageteils gestaltet, das Montageteil mit dem Tragring bzw. der Komponente zu verrasten und/oder zu verklemmen. Dies ermöglicht, die jeweilige Paarung von Montageteil und Tragring bzw. Komponente nur mithilfe des Zusammenschiebens bzw. Einschiebens eines Teils in das andere aneinander zu befestigen und somit zueinander ortsfest anzuordnen, was die Montage weiter vereinfacht.

Einer des zumindest eine Befestigungsabschnitts des Montageteils kann mittels einer Rastnase gebildet sein. Diese hintergreift im Montagezustand, also nach dem Einschieben, entgegen einer Demontagerichtung in Bezug auf den korrespondierenden Tragring bzw. die korrespondierende Komponente gesehen, den Tragring bzw. die Komponente rastend. D. h. die jeweils aneinander befestigten Teile können nicht oder nur unter Überwindung eines durch die Verrastung erzeugten Widerstands wieder voneinander gelöst und damit demontiert werden.

Alternativ oder zusätzlich kann einer des zumindest eine Befestigungsabschnitts des Montageteils mittels einer Rastausnehmung gebildet sein, die, entgegen einer Demontagerichtung in Bezug auf den Tragring bzw. die Komponente gesehen, vom Tragring bzw. von der Komponente hintergriffen wird, verbunden mit den gleichen Vorteilen wie hinsichtlich der Rastnasenlösung.

Vorzugsweise ist eines der vorgenannten Montageteile gestaltet, in ein Wandungselement ortsfest eingesetzt oder an diesem angebracht zu werden. Das Wandungselement weist in einem korrespondierenden Einsetz- bzw. Anbringabschnitt eine Ausnehmung zur Aufnahme des Montageteils auf. Solch ein Wandungselement kann mittels eines innen hohlen Rahmenprofils gebildet sein, dass an einer dem Montageteil zugewandten Außenseite eine entsprechend geformte Einsetzöffnung aufweist. Dies hat den Vorteil, dass der mit solch einem Montageteil versehene Einsatz ausschließlich über das Montageteil am Wandungselement angebracht werden kann. D. h. weder Tragring noch Komponente müssen über Vorrichtungen zur Anbringung an solch einem Wandungselement verfügen. Damit sind nahezu alle Arten von Komponenten und Tragringen über ebenjenes Montageteil universeller einsetzbar.

Ein erfindungsgemäßer Einsatz weist dementsprechend einen Tragring gemäß der vorgenannten Ausführung auf. Er umfasst ferner eine in bekannter Weise auf bzw. in den Tragring ortsfest auf- bzw. einsetzbar gestaltete Abdeckung. Abgesehen davon umfasst dieser Einsatz eines der vorgenannten Montageteile. Dieses ist über seine erste Befestigungsvorrichtung am Tragring ortsfest angebracht. Schließlich umfasst der Einsatz die vorgenannte Komponente. Das Montageteil ist über seine zweite Befestigungsvorrichtung an der korrespondierenden Befestigungsvorrichtung der Komponente ortsfest angebracht. D. h. nicht der Tragring sondern das Montageteil des erfindungsgemäßen Einsatzes hält die Komponente, verbunden mit den bereits genannten Vorteilen.

Vorzugsweise ist das Montageteil über seine Außenkontur an einer korrespondierenden Innenkontur des Tragrings ortsfest angebracht. Die Komponente ist vorzugsweise von der Innenkontur des Montageteils ortsfest gehaltert. Dies hat den Vorteil der einfachen Montage. Im Extremfall kann auf zusätzliche Befestigungsmittel wie Schrauben verzichtet werden.

Die Abdeckung des Einsatzes weist vorzugsweise ein Rahmenteil und ein darin eingesetztes Innenteil auf, ist also zweiteilig ausgebildet. Das Rahmenteil ist in bekannter Weise zwischen Innenteil und Tragring angeordnet und ist in seiner Montageposition von der Anordnung Innenteil und Tragring fixiert. Dies erfolgt üblicherweise mittels Formschlusses zwischen Innenteil und Rahmenteil sowie der Befestigung des Innenteils am Tragring oder am Montageteil.

Die vorgenannten Einsätze ermöglichen das nachstehend angegebene Montageverfahren. Es weist als ersten oder zweiten Schritt das ortsfeste Anbringen der jeweiligen Komponente am zugehörigen Montageteil auf. Als zweiten bzw. ersten Schritt weist das Verfahren das ortsfestes Anbringen des Tragrings am Montageteil auf. Diese zwei Montageschritte sind also in ihrer zeitlichen Abfolge gegeneinander austauschbar. Nach Abschluss dieser zwei Montageschritte ist mithin ein Modul entstanden, das in einem nachfolgenden Schritt je nach Montageart, Aufputz oder Unterputz, in bekannter Weise über den Tragring an einer Unterputzdose oder einem Aufputzgehäuse angebracht wird. Das Verfahren wird mit einem Schritt des ortsfesten Anbringens der Abdeckung auf bzw. in dem Tragring oder am Montageteil abgeschlossen.

Vorzugsweise wird zumindest eines dieser zwei Teile, also die Komponente und/oder der Tragring, am Montageteil ortsfest angebracht, indem das betreffende Teil und das Montageteil zusammen geschoben werden. Dies erfolgt in der Weise, dass das betreffende Teil am Ende dieses Zusammenschiebens aufgrund eines kraft- und/oder formschlüssigen Eingriffs mit dem Montageteil automatisch an diesem zumindest vorfixiert ist. D. h. im Extremfall besteht der Schritt des ortsfesten Anbringens des betreffenden Teils am Montageteil lediglich aus dem vorgenannten Zusammen-oder Einschieben bis zur Endstellung, was eine besonders einfache und damit wenig fehleranfällige Montage ermöglicht.

Weitere Merkmale und Vorteile der Erfindung ergeben sich aus der nachfolgenden Beschreibung einer bevorzugten Ausführungsform. Es zeigen:
- Figur 1: einen Einsatz gemäß einer Ausführungsform der Erfindung, montiert in einer Unterputzdose,
- Figur 2: die Anordnung einer Sensorkomponente in Bezug auf ein Montageteil gemäß der Ausführungsform der Erfindung in zwei Explosionsansichten,
- Figur 3: die Anordnung von Figur 2 in Bezug auf einen Tragring des Einsatzes in Teil-Explosionsansicht,
- Figur 4: die Anordnung von Figur 3 in Bezug auf die Unterputzdose von Figur 1 in einer Teil-Explosionsansicht,
- Figur 5: die Anordnung von Tragring, Montageteil und Abdeckungs-Innenteil in einer Teil-Explosionsansicht,
- Figur 6: die Abdeckung des Einsatzes von Figur 1 in einer Explosionsansicht,
- Figur 7: ein Verfahren zum Montieren des Einsatzes von Figur 1, gemäß einer Ausführungsform der Erfindung,
- Figur 8: den Einsatz von Figur 1 in einer Explosionsansicht,
- Figur 9: ein Montageteil gemäß einer zweiten Ausführungsform der Erfindung in einer Explosionsansicht mit einem Tragring und
- Figur 10: Teile eines Einsatzes gemäß einer anderen Ausführungsform der Erfindung in einer Explosionsansicht.

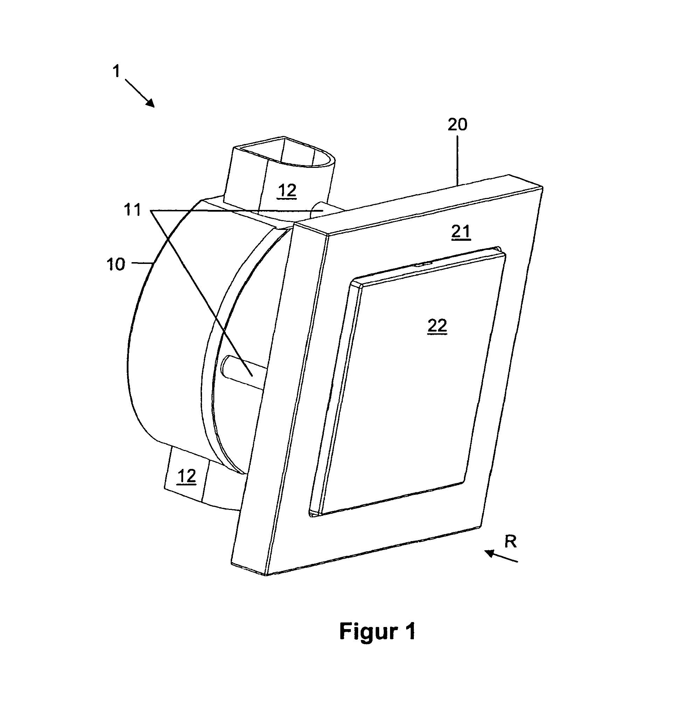

Figur 1 zeigt exemplarisch einen mit Sensorfunktionalität versehenen, in einer Unterputzdose 10 eingesetzten Einsatz 1 gemäß einer Ausführungsform der Erfindung.

Die Unterputzdose 10 umfasst, in Einschub- bzw. Montagerichtung R des Einsatzes 1 gesehen, außenseitig angeordnete bzw. ausgebildete Befestigungsdome 11. Diese dienen, wie später näher erläutert, in bekannter Weise der Befestigung eines hier nicht sichtbaren Tragrings 60 des Einsatzes 1. Ferner sind hier zwei Kabeldurchführungen 12 als domartige, innen hohle Vorsprünge ausgebildet und dienen der Verkabelung einer hier ebenfalls nicht sichtbaren, exemplarisch als Sensorkomponente ausgebildeten Komponente 30.

Der Einsatz 1 ist an seiner der Montagerichtung R zugewandten Vorderseite von einer beispielhaft zweiteilig ausgebildeten Abdeckung 20 abgedeckt. Die Abdeckung 20 umfasst ein auf den Tragring 60 aufgesetztes Rahmenteil 21, das innen hohl ist. Ein Innenteil 22 ist in bekannter Weise auf das Rahmenteil 21 aufgesetzt und ferner an der Komponente 30, dem Tragring 60 bzw. einem ebenfalls später näher erläuterten Montageteil 40 befestigt.

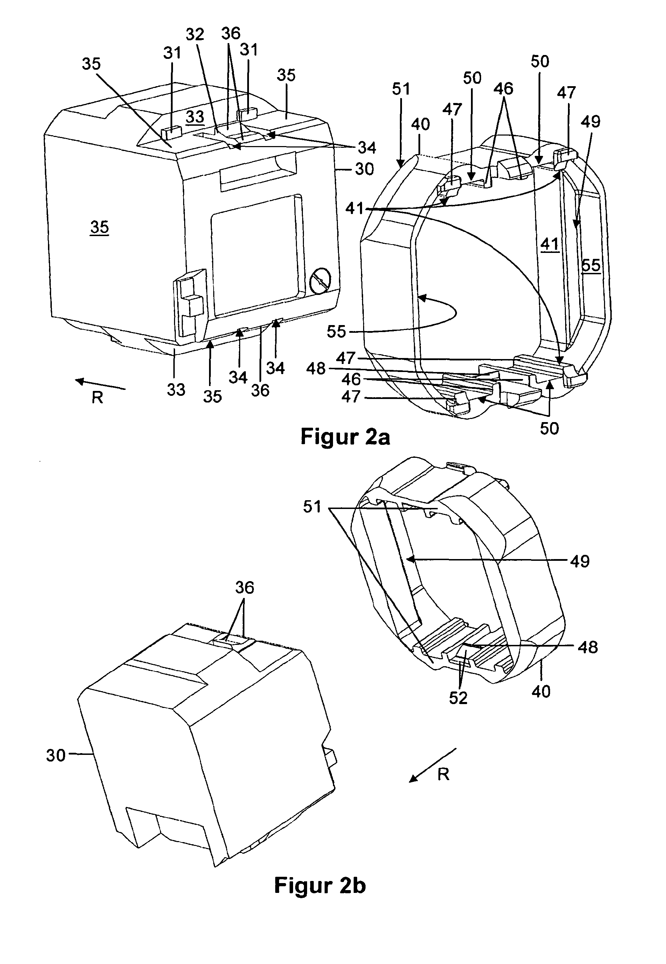

Figur 2 zeigt zwei Explosionsansichten der Komponente 30 und des Montageteils 40. Wie in Figur 2a erkennbar, wird bei der Montage die Komponente 30 entgegen der Richtung R in das Montageteil 40 bzw. das Montageteil 40 in Richtung R auf die Komponente 30 geschoben. Dazu weisen beide Teile 30, 40 entsprechende Führungen auf. Bei der Komponente 30 sind dies zumindest zwei Paare von Führungsnuten 34, die an voneinander weg gewandten, gegenüberliegenden Außenflächen 35 der Komponente 30 ausgebildet sind und sich entlang der Richtung R erstrecken.

Das Montageteil 40 weist an korrespondierenden Stellen zweier einander zugewandter Flächen 41, die beide in Richtung des hohlen Innenraums des Montageteils 40 weisen, aufeinander zu hervorstehende, entlang der Richtung R erstreckende Führungsvorsprünge 46 auf. Die Vorsprünge 46 gelangen beim Aufschieben des Montageteils 40 auf die Komponente 30 bzw. beim Einschieben der Komponente 30 in das Montageteil 40 mit einer jeweiligen der Führungsnuten 34 der Komponente 30 in Eingriff und werden so entlang der Richtung R geführt. Dadurch wird die Gefahr eines Verkantens von Komponente 30 und Montageteil 40 zumindest verringert, was die Montage vereinfacht.

Ferner sind am Montageteil 40 seitlich der jeweiligen Paarung von Vorsprüngen 46, 46 zwei weitere Vorsprünge 47, 47 ausgebildet. Jede so entstehende Paarung von Vorsprüngen 47, 47 steht in derselben Richtung hervor wie die benachbarten Vorsprünge 46, 46 und erstreckt sich exemplarisch ebenso in Richtung R. Die einander zugewandten Seitenflächen einander gegenüberstehender Vorsprünge 47, 47 dienen als Gleit-Führungsflächen in Bezug auf eine gegenüberliegende Gleit-Führungs-Außenfläche 35 der Komponente 30 und bilden so Führungsflächen 41.

Zwischen zwei nebeneinander angeordneten Vorsprüngen 46, 46 ist jeweils ein Vorsprung 48 ausgebildet, von denen nur der untere sichtbar ist. Jeder Vorsprung 48 erstreckt sich im Wesentlichen quer zur Richtung R und steht in die gleiche Richtung hervor wie die unmittelbar benachbarten Vorsprünge 46, 46, und zwar vorzugsweise in dem Maß wie die Vorsprünge 47, 47. Vorzugsweise stehen die Vorsprünge 46, 46 also etwas weiter hervor als die Vorsprünge 47, 47, 48. Dies ermöglicht ihnen, mit den Führungsnuten 34, 34 in Eingriff zu gelangen. Die Vorsprünge 47, 47 liegen auf einer korrespondierenden der Flächen 35 der Komponente 30 auf.

Jeder Vorsprung 48 wirkt mit einem korrespondierenden Vorsprung 32 der Komponente 30 zusammen. Beide zueinander gehörenden Vorsprünge 32, 48 weisen an einander zugewandten Seiten, hier also nach vorn bzw. nach hinten, Anlaufschrägen 36, 52 auf. Dies ermöglicht der jeweiligen Paarung miteinander korrespondierender Vorsprünge 32, 48, beim Zusammenschieben von Komponente 30 und Montageteil 40 aneinander vorbei bewegt werden zu können. Im Montagezustand hintergreifen die Vorsprünge 32, 48 der jeweiligen Paarung einander in Demontagerichtung, also in Richtung des Wiederauseinanderziehens von Komponente 30 und Montageteil 40. Damit halten die Komponente 30 und das Montageteil 40 einander im Montagezustand fest, sodass ein Komponente-Montageteil-Modul 30, 40 entsteht.

Damit die Komponente 30 und das Montageteil 40 sicher im Montagezustand gehalten werden, sind als zusätzliche Sicherung exemplarisch quaderartige Vorsprünge 31 vorgesehen, die im Montagezustand in nutenartige Ausnehmungen 50 eingreifen, die von zwei jeweiligen, unmittelbar benachbarten Vorsprüngen 46, 47 gebildet sind. Dies verhindert ein Verdrehen von Komponente 30 und Montageteil 40 um eine Achse parallel zur Richtung R. Die Vorsprünge 31 stehen von einer entgegengesetzt zur Richtung R weisenden Fläche 33 hervor, die zugleich als Endanschlag für das Montageteil 40 dient. Das Montageteil 40 liegt also mit einer korrespondierenden Fläche 51 an der zugehörigen Fläche 33 der Komponente 30 an und ist damit sicher in der Montageposition fixiert.

Alternativ oder zusätzlich können auch in Figur 2a rechts und links ausgebildete, vertikal verlaufende Außenflächen 35 der Komponente 30 sowie Innenflächen 41 des Montageteils 40 als miteinander korrespondierende Gleit-Führungsflächen vorgesehen sein. D. h. die Teile 30, 40 werden beim Zusammenschieben entlang dieser Flächenpaarungen 35, 41 geführt.

Das Montageteil 40 weist zwei hier vertikal verlaufende, einander zugewandte Flächen 41 auf. Diese erstrecken sich nicht über die gesamte Tiefe des Montageteils 40 in Längserstreckung des Montageteils 40, also entlang der Montagerichtung R gesehen, die sich hier von einer Rückseite des Montageteils 40 weg erstrecken verlaufen parallel zur Richtung R und. Die Flächen 41 schließen sich an die in Richtung R weisende Auflagefläche 51 an und haben eine Abmessung in Richtung R von etwa der Hälfte der Tiefe des gesamten Montageteils 40. Sie knicken an ihrem der hinteren Auflagefläche 51 abgewandten Ende jeweils nach außen und voneinander weg ab und werden von einem zugehörigen Außenwandabschnitt 55 begrenzt. Es entstehen mithin zwei innen liegende, eckartige Ausnehmungen 49.

Figur 2b zeigt eine Explosionsansicht der Komponente 30 und des Montageteils 40 von einer Rückseite dieser Teile 30, 40 in Figur 2a. Hier sind besonders deutlich die vorgenannten Anlaufschrägen 52 des hier unteren Rastvorsprungs 48 zu erkennen. Ferner sind die Flächen 51, 51 zu sehen, mit denen das Montageteil 40 an den korrespondierenden, hier nicht sichtbaren Flächen 33 der Komponente 30 anliegt.

Alternativ stehen die Vorsprünge 46, 46 maximal soweit hervor wie die Vorsprünge 47, 47, 48. D. h. die Vorsprünge 46, 46 gelangen nicht mit den Nuten 34, 34 in Eingriff. In dem Fall sind die Nuten 34, 34 nur vorgesehen, damit der unmittelbar angrenzende Rastvorsprung 32 derart federnd gelagert ist, dass er beim Zusammenschieben der Teile 30, 40 vom korrespondierenden Rastvorsprung 48 weg gedrängt werden kann.

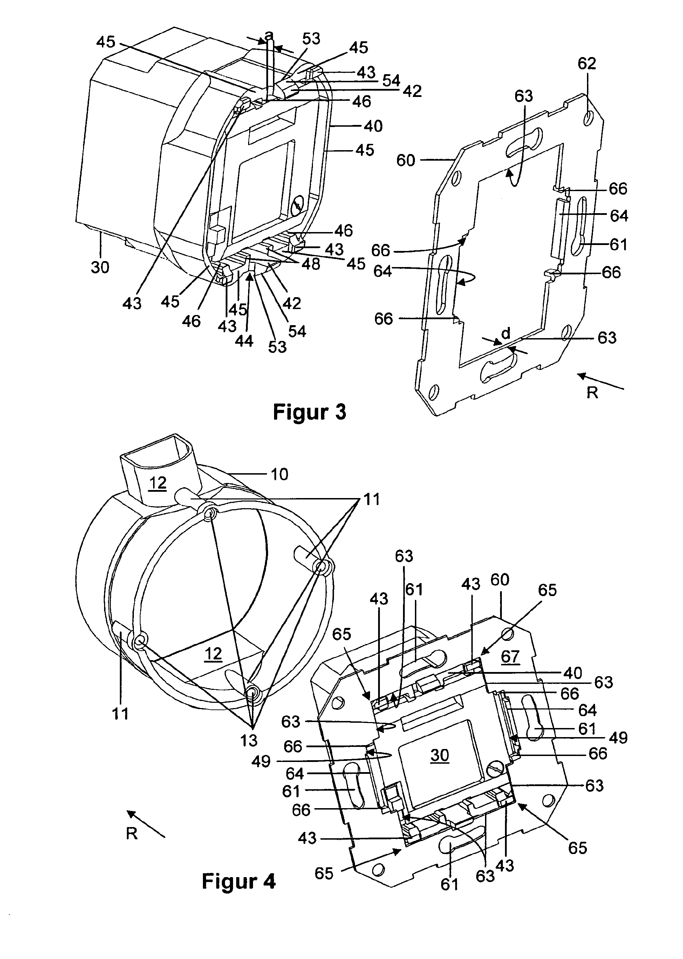

Figur 3 zeigt das Komponente-Montageteil-Modul 30, 40 mit dem vorgenannten Tragring 60 in Teil-Explosionsansicht. Zur Montage des Tragrings 60 am Montageteil 40 ist hier exemplarisch ebenfalls ein Rastmechanismus vorgesehen. Das Montageteil 40 weist beispielhaft in den Bereichen, an denen die Vorsprünge 46, 48 ausgebildet sind, außenseitig von einer jeweiligen Anschlagfläche 45 in Richtung Tragring 60 hervorstehende Rastzungen 42 auf, deren Rastspitzen 53 voneinander weg weisen. Jede Rastspitze 53 weist zur Anschlagfläche 45, an die die zugehörige Rastzunge 42 angeformt ist, einen vorbestimmten Abstand a auf, der zumindest gleich einer Dicke d eines korrespondierenden Randabschnitts 63 des Tragrings 60 ist. Der Randabschnitt 63 weist im Montagezustand in Richtung der jeweils zugehörigen Rastzunge 42 in Richtung Montageteil-Inneres. Beim Zusammenschieben des gezeigten Moduls 30, 40 und des Tragrings 60 werden die Rastzungen 42, 42 über entsprechend ausgebildete Anlaufschrägen 54 von den Randabschnitten 63 des Tragrings 60 zusammengedrückt und sind so an diesen Randabschnitten 63 vorbei bewegbar. Haben die Rastzungen 42 den jeweiligen Randabschnitt 63 überwunden, schnappen sie zurück und hintergreifen mit ihren Rastspitzen 53 den jeweiligen Randabschnitt 63. Aufgrund des Maßes für den Abstand a in Bezug auf die Dicke d ist der Tragring 60 sicher am Montageteil 40 gehaltert bzw. fixiert. D. h. durch den Abstand a der Rastspitzen 53 zur zugehörigen Anschlagfläche 45 entsteht ein Zwischenraum zur Aufnahme des zugehörigen Randabschnitts 63, also ein jeweiliger Aufnahmeraum 44.

Die Anschlagflächen 45 begrenzen den Weg beim Zusammenschieben von Montageteil 40 und Tragring 60. Vorzugsweise liegt der Tragring 60 im Montagezustand an den Anschlagflächen 45 an, sodass er aufgrund der Rastzungen 42 sicher in Position gehalten ist. Es entsteht mithin ein Komponente-Montageteil-Tragring-Modul 30, 40, 60.

Das Montageteil 40 weist vorzugsweise ferner eine Verdrehsicherung hier in Form von vier Vorsprüngen 43 auf, die von einer jeweiligen der Anschlagflächen 45 in Richtung Tragring 60 hervorstehen.

Der Tragring 60 ist beispielhaft rechteckig ausgeführt und weist vier bogenförmig und langlochartig ausgebildete, übliche Schraublöcher 61 und in Eckbereichen kreisrunde Schraublöcher 62 auf, von denen jeweils nur eines mit Bezugszeichen versehen ist. Die Löcher 61, 62 dienen in bekannter Weise der Befestigung des Tragrings 60 an einer Unterputzdose oder einem Aufputzgehäuse.

Wie ferner in Figur 3 gezeigt, weist der Tragring 60 an zwei hier vertikalen, einander zugewandten Randabschnitten 63 Halteelemente für die vorgenannte Abdeckung 20 exemplarisch in Form von Vorsprüngen 64, 66 auf. Die Vorsprünge 64, 66 knicken von einem jeweiligen dieser zwei Randabschnitte 63 in Richtung Montageteil 40, also in Montagerichtung R, ab.

Figur 4 zeigt das Komponente-Montageteil-Tragring-Modul 30, 40, 60 mit der vorgenannten Unterputzdose 10 in Teil-Explosionsansicht. Die Unterputzdose 10 ist in bekannter Weise gestaltet und weist vier Befestigungsdome 11 mit innen liegenden Gewindeöffnungen 13 auf, in die in Richtung R durch korrespondierende Schraublöcher 61 des Tragrings 60 geführte, hier nicht dargestellte Befestigungsschrauben eingeschraubt sind und so das gesamte Komponente-Montageteil-Tragring-Modul 30, 40, 60 in bekannter Weise an der Unterputzdose 10 fixieren. D. h. hier ändert sich nichts an der Montage.

In Figur 4 wird eine Aufgabe der Ausnehmungen 49 des Montageteils 40 deutlich. Die Ausnehmungen 49 sind vorgesehen, dass das Montageteil 40 beim Zusammenschieben mit dem Tragring 60 nicht den Vorsprüngen 64, 66 im Weg steht. D. h. diese finden in den Ausnehmungen 49 Platz.

Wie zu erkennen, weist der Tragring 60 inwendig, in Richtung R gesehen, eine im Wesentlichen rechteckförmige Durchgangsöffnung auf. Im gezeigten Montagezustand liegen die vorgenannten Vorsprünge 43 an nach innen weisenden Eckausnehmungen 65 an, die durch aneinander stoßende Randabschnitte 63 des Tragrings 60 gebildet sind. Dadurch verhindern die Vorsprünge 43 ein Verdrehen des Montageteils 40 in Bezug auf den Tragring 60 um eine Achse entlang der Richtung R, bildet also eine Verdrehsicherung, was die Montage erleichtert.

Alternativ oder zusätzlich dazu sind die Ausnehmungen 49 vorzugsweise so ausgebildet, dass die Vorsprünge 64, 66 außenseitig an gegenüberliegenden Flächen des Montageteils 40 anliegen und somit eine Verdrehsicherung bieten. In dem Fall können also die Vorsprünge 43 entfallen.

Im gezeigten Beispiel sind die Vorsprünge 66 des Tragrings 60 jeweils in einem Zwischenraum zwischen Komponente 30 und Montageteil 40 angeordnet. Liegen die Vorsprünge 66 hier zumindest horizontal sowohl an der Komponente 30 als auch am Montageteil 40 an, bildet auch diese Anordnung eine Verdrehsicherung des Tragrings 60 in Bezug auf das Komponente-Montageteil-Modul 30, 40.

Die der Unterputzdose 10 abgewandte Seite des Tragrings 60 bildet eine Fläche 67, auf die später näher eingegangen wird.

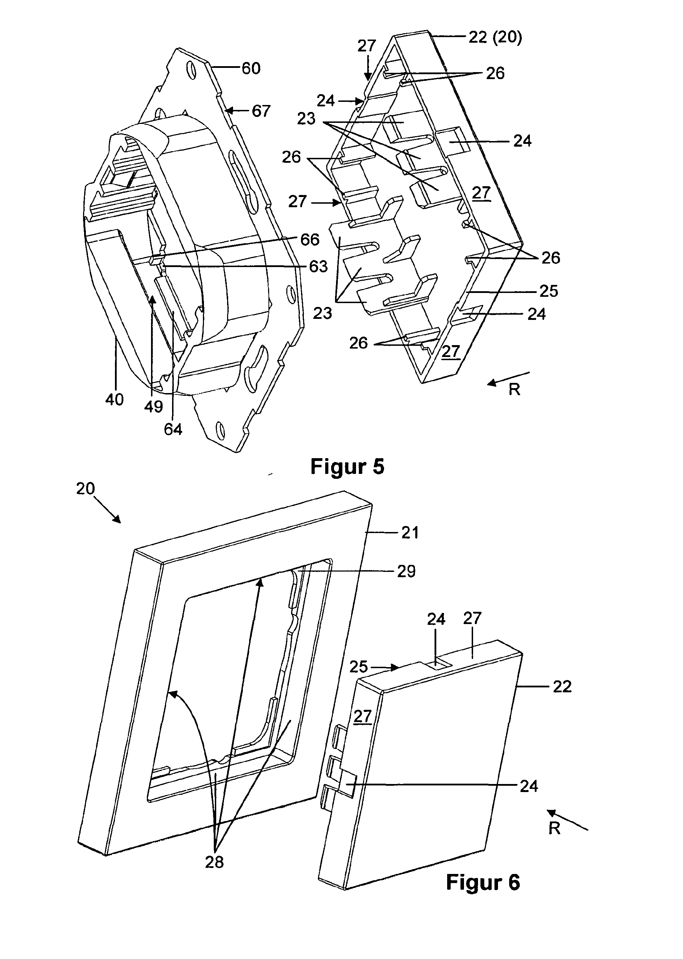

Figur 5 zeigt das Modul 30, 40, 60 von Figur 4 ohne Komponente 30 und mit dem vorgenannten Innenteil 22 einer sonst nicht weiter dargestellten Abdeckung 20 von einer Rückseite des Montageteils 40 in Figur 4. Hier ist deutlich erkennbar, dass die Vorsprünge 64, 66 in der jeweiligen Ausnehmung 49 des Montageteils 40 aufgenommen sind. Der im jeweiligen angrenzenden Bereich ausgebildete Randabschnitt 63 ist so geformt, dass er in Richtung gegenüberliegenden, hier nicht sichtbaren Randabschnitt 63 nicht über den unmittelbar benachbarten Vorsprung 66 hervorsteht sondern maximal bündig mit diesem abschließt. Dadurch ergibt sich ein gesamter Rand zum Einschieben hier des Innenteils 22 in Richtung R.

Das Innenteil 22 weist an zwei gegenüberliegenden Seiten exemplarisch jeweils drei federnd ausgebildete Rastvorsprünge 23 auf, die in Richtung Tragring 60 hervorstehen. Die nicht näher bezeichneten Rastspitzen der beiden Trios von Rastvorsprüngen 23 weisen voneinander weg und somit in Richtung einer jeweiligen Außenseite des Innenteils 22. Das Innenteil 22 weist ferner hier acht Vorsprünge 26 auf, die von einer in Richtung Tragring 60 weisenden, hier umlaufend ausgebildeten Fläche 25 in Richtung Tragring 60 hervorstehen und so ausgebildet sind, dass sie im Montagezustand auf dem Tragring 60 aufliegen, und zwar auf der vorgenannten Fläche 67. Damit wird zwischen den Flächen 25, 67 ein Zwischenraum geschaffen, der vom Tragring 60, den Vorsprüngen 26 und dem sonstigen Innenteil 22 begrenzt ist. In diesem Zwischenraum, also um die Vorsprünge 26 herum, ist das vorgenannte Rahmenteil 21 aufgenommen und in Position gehalten.

An quer zur Richtung R weisenden Außenflächen 27 des Innenteils 22 sind Ausnehmungen 24 ausgebildet, die einer später näher erläuterten Demontage des Innenteils 22 dienen.

Bei der Montage werden Innenteil 22 und Tragring 60 entlang der Richtung R zusammen geschoben. Gelangen die Trios von Rastvorsprüngen 23 mit den Vorsprüngen 64 in Kontakt, werden die Rastvorsprünge 23 von den Vorsprüngen 64 aufeinander zu gedrückt und ferner vorzugsweise von den Vorsprüngen 66 entlang der Richtung R geführt, was die Montage vereinfacht. Haben die Rastvorsprünge 23 die Vorsprünge 64 überwunden, schnappen sie zurück, und zwar in die jeweilige Ausnehmung 49 des Montageteils 40 hinein. Dies ist der Grund, warum die Vorsprünge 64 in Richtung R nicht die gesamte Ausnehmung 49 ausfüllen sondern etwa bei der Hälfte der Ausnehmung 49 enden. Somit entsteht ein Hinterschnitt zum Zwecke des Hintergreifens durch die Vorsprünge 23 bzw. deren Rastspitzen. Die Ausnehmungen 49 dienen mithin dem Zweck, dass das Innenteil 22 wie bisher am Tragring 60 angebracht werden kann.

Figur 6 zeigt die Abdeckung 20 in Explosionsansicht. Die Abdeckung 20 ist exemplarisch zweiteilig ausgebildet und umfasst das vorgenannte Innenteil 22 und Rahmenteil 21. Beide Teile 21, 22 sind in üblicher Weise so ausgebildet, dass das Rahmenteil 21 auf den hier nicht dargestellten Tragring 60 aufgelegt und vom Innenteil 22 in seiner Montageposition fixiert wird. Dazu weist das Rahmenteil 21 inwendig eine Durchgangsöffnung für das Innenteil 22 auf, die von vier Innenwänden 28 umschlossen ist. An einer dem Innenteil 22 abgewandten Seite der Durchgangsöffnung befindet sich ein Abschnitt mit einer in Richtung Innenteil 22 weisenden, vorzugsweise umlaufend durchgehend ausgebildeten Auflagefläche 29. Das Innenteil 22 kommt mit seiner Fläche 25 auf der Fläche 29 des Rahmenteils 22 zu liegen und liegt vorzugsweise zusammen mit den Vorsprüngen 26 des Innenteils 21 auf der Fläche 67 des Tragrings 60 auf. Damit ist das Rahmenteil 21 in Montageposition über die Vorsprünge 26 und aufgrund der Befestigung des Innenteils 22 am Tragring 60 gehalten und damit fixiert.

Vorzugsweise sind die Flächen 27, 28 ausgebildet, die Teile 21, 22 aneinander entlang der Richtung R zu führen. Die nicht durchgehenden Ausnehmungen 24 stehen im Montagezustand entgegen der Richtung R etwas über das Rahmenteil 21 hervor. Damit ist es möglich ein Werkzeug wie einen Schraubendreher zwischen Rahmenteil 21 und Innenteil 22 in die jeweilige Ausnehmung 24 einzuführen und daraufhin das Innenteil 22 vom sonstigen Einsatz 1 abhebeln, also demontieren zu können.

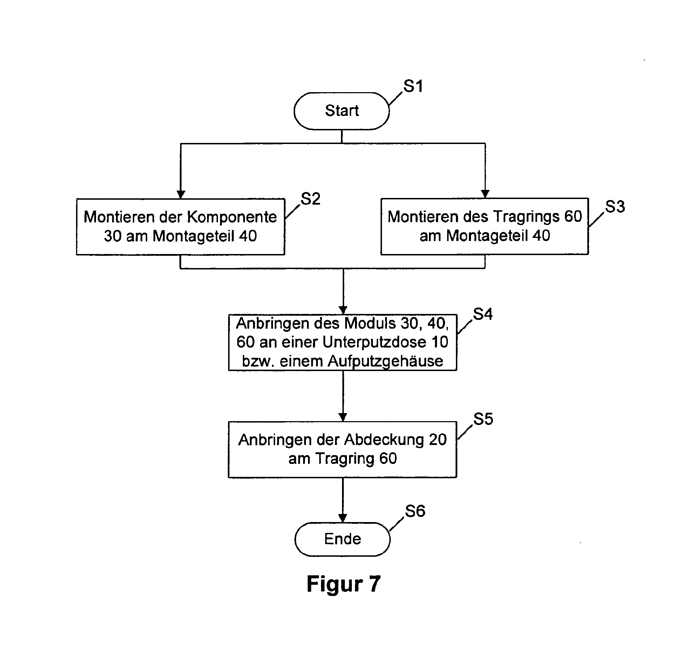

Mit dem Einsatz 1 ist das in Figur 7 gezeigte Montageverfahren möglich. Nach dem Beginn in einem Schritt S1 werden in einem Schritt S2 die Komponente 30 und das Montageteil 40 aneinander angebracht bzw. montiert. Zeitgleich, davor oder danach werden das Montageteil 40 und der Tragring 60 in einem Schritt S3 zusammen geschoben und aneinander befestigt bzw. montiert. Im Ergebnis dieser zwei Schritte S2, S3 ist das vorgenannte Komponente-Montageteil-Tragring-Modul 30, 40, 60 gebildet. D. h. der aus dem Stand der Technik bekannte Schritt des Befestigens einer Komponente an einem Tragring ist durch diese zwei Montageschritte ersetzt.

Anschließend wird das Modul 30, 40, 60 in einem Schritt S4 in bekannter Weise bei Unterputzmontage an der vorgenannten Unterputzdose 10 oder bei Aufputzmontage an einem entsprechenden Aufputzgehäuse angebracht. Das Modul 30, 40, 60 tritt einfach an die Stelle der sonst verwendeten Einheit aus Komponente und Tragring.

Schließlich wird die Abdeckung 20 in einem nachfolgenden Schritt S5 an dem montierten Tragring 60 befestigt. Damit ist das Montageverfahren in einem Schritt S6 beendet.

Im Ergebnis gibt es nur einen einzigen zusätzlichen Schritt, das Montageverfahren ändert sich gegenüber dem Stand der Technik nur minimal. Der Vorteil ist, dass sich eine Person, die den Einsatz 1 montieren will, lediglich an die Montage von Komponente 30, Tragring 60 und Montageteil 40 gewöhnen muss, die Montageschritte S2, S3 selbst aber sehr einfach gehalten sind. Und doch ist mit diesem Verfahren die Möglichkeit geschaffen, die vorgenannte Herstellerunabhängigkeit und Freiheit in der Gestaltung derartiger Einsätze 1 zu erlangen.

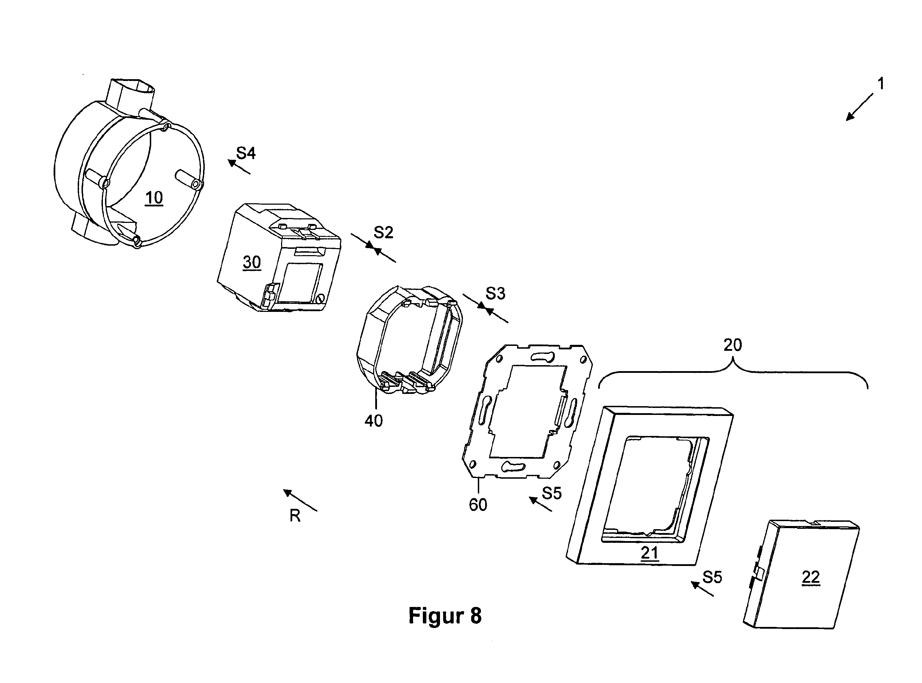

Figur 8 zeigt den Einsatz 1 in Explosionsdarstellung. Die Pfeile geben die Montagerichtungen hinsichtlich der einzelnen Teile an. Ferner sind die Schritte von Figur 7 angegeben. Daraus wird ersichtlich, wie das vorgenannte Verfahren auf den Einsatz 1 anzuwenden ist.

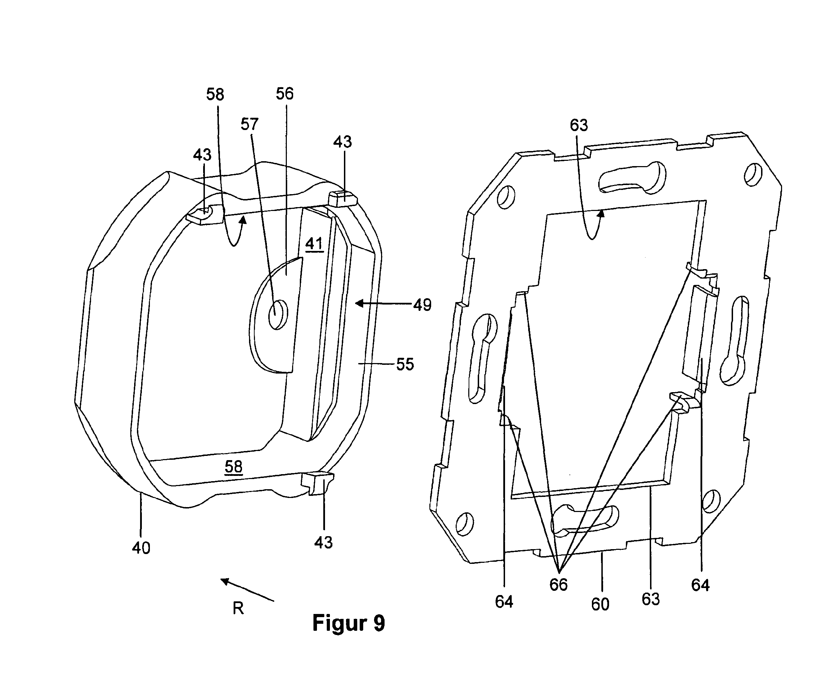

Figur 9 zeigt ein Montageteil 40 gemäß einer zweiten Ausführungsform der Erfindung mit dem Tragring 60 in Explosionsansicht. Hier fehlen die Rastzungen 42 und einer der Vorsprünge 43. Stattdessen sind zwei diagonal gegenüberliegende Vorsprünge 43 rastzungenartig ausgebildet. D. h. diese zwei Vorsprünge 43 haben eine Doppelfunktion: das Verrasten und verdrehsichere Fixieren des Tragrings 60 am Montageteil 40. Der dritte Vorsprung 43 hier rechts oben könnte zwar entfallen, dient aber der sicheren verdrehsicheren Fixierung des Tragrings 60 am Montageteil 40.

Für die Montage der hier nicht abgebildeten Abdeckung 20 verfügt das Montageteil 40 wieder über einander gegenüberliegende Ausnehmungen 49, gebildet mittels Führungsfläche 41 und Wandabschnitt 55. Und der Tragring 60 verfügt über die bereits beschriebenen Vorsprünge 64, 66.

An den einander zugewandten Führungsflächen 41, von denen nur die rechte sichtbar ist, ist jeweils eine Lasche 56 angeformt bzw. angebracht.

Beide Laschen 56 erstrecken sich aufeinander zu und weisen jeweils eine sich in Richtung R erstreckende Befestigungsöffnung 57 auf. Die Öffnungen 57 dienen dem Durchführen einer jeweiligen, nicht dargestellten Befestigungsschraube, die mit einer zugehörigen, nicht dargestellten Komponente 30 verschraubt ist. Die Komponente 30 weist dementsprechend ebenfalls Befestigungsöffnungen bzw. Gewindeöffnungen auf, in die die Befestigungsschrauben eingeschraubt sind und damit die Komponente 30 am Montageteil 40 fixieren. Die Laschen 56 ermöglichen also die Befestigung von Komponenten beispielsweise in Form von Steckdosen-Teileinsätzen, die üblicherweise über Schrauben an einem entsprechend geformten Tragring zu befestigen wären.

Hier fehlen exemplarisch die Vorsprünge 46, 47. Stattdessen gibt es an den betreffenden Stellen hier durchgehende Innenflächen 58.

Die Montage erfolgt wie bei der ersten Ausführungsform der Erfindung.

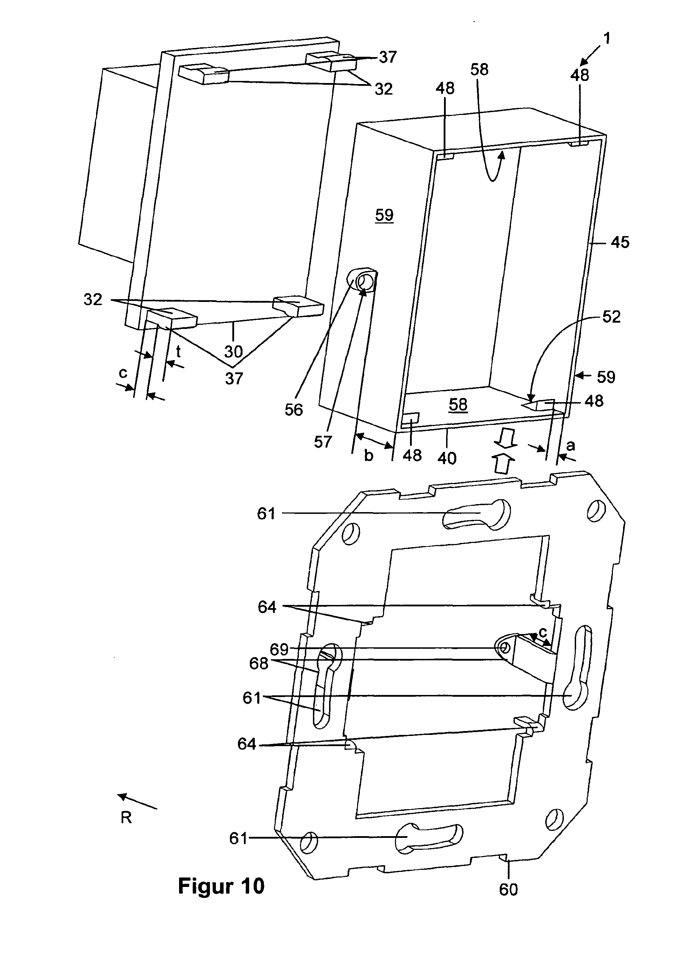

Figur 10 zeigt einen Einsatz 1 gemäß einer anderen Ausführungsform der Erfindung in Explosionsansicht. Hier verfügt der Tragring 60 über zwei Befestigungslaschen 68, die mittels zueinander parallel angeordneter, sich in Richtung R erstreckender Vorsprünge gebildet sind. Die linke Lasche 68 ist durch das linke Schraubloch 61 hindurch teilweise sichtbar. Die Laschen 68 knicken an ihren freien Enden aufeinander zu ab und weisen jeweils eine Befestigungsöffnung 69 auf. Beide Befestigungsöffnungen 69 erstrecken sich in Richtung R und sind beispielhaft mit einem Innengewinde versehen.

Das Montageteil 40 weist an zu diesen abknickenden Abschnitten der Befestigungslaschen 69 korrespondierenden Stellen zweier gegenüberliegender Außenseiten bzw. -flächen 59 Befestigungslaschen 56 auf, von denen die linke sichtbar ist. Jede Lasche 56 verfügt über eine jeweilige Befestigungsöffnung 57. Beide Öffnungen 57 erstrecken sich in Richtung R.

Bei der Montage werden das Montageteil 40 und der Tragring 60 im Wesentlichen quer zur Richtung R, in Figur 10 nahezu vertikal, zusammen geschoben, wie mittels der Blockpfeile angedeutet. Dies erfolgt vorteilhafterweise so, dass das Montageteil 40 beim Zusammenschieben mittels seiner Außenflächen 59 sowie seiner hier nach vorne weisenden, umlaufend ausgebildeten Anschlagfläche 45 entlang zugewandter, unmittelbar gegenüberliegender, nicht bezeichneter Flächen der Laschen 69 und der Vorsprünge 64 sowie der ebenfalls nicht bezeichneten Rückseite des Tragrings 60 geführt wird. Das Zusammenschieben endet, wenn die jeweils zueinander gehörenden Befestigungsöffnungen 57, 69 in Richtung R gesehen miteinander fluchten.

Die freien Enden der Laschen 56, 56 können alternativ auch voneinander weg abknickend ausgebildet sein. In dem Fall würden die vorgenannten Flächen 59 vorteilhafterweise entlang der voneinander weg weisenden Außenflächen der Laschen 68 geführt.

Die Laschen 56 weisen zur Fläche 45 einen Abstand b auf. Der Abstand b ist beispielhaft so gestaltet, dass die Laschen 56, in Richtung R gesehen, hinter den abknickenden Abschnitten der Laschen 69 zu liegen kommen. Zum endgültigen Befestigen wird vorteilhafterweise eine Schraube durch beide miteinander fluchtenden Befestigungsöffnungen 57, 69 hindurchgeführt und mit einer Mutter verschraubt, sodass Montageteil 40 und Tragring 60 aneinander befestigt sind und so ein Montageteil-Tragring-Modul 40, 60 bzw. mit montierter Komponente 30 ein Komponente-Montageteil-Tragring-Modul 30, 40, 60 bilden.

Alternativ ist der Abstand b so gestaltet, dass die abknickenden Abschnitte der Laschen 69, in Richtung R gesehen, hinter den Laschen 56 zu liegen kommen. Ansonsten ändert sich nichts an der Befestigung des Montageteils 40 und des Tragrings 60 aneinander.

Alternativ weist jede in Richtung R jeweils hintere Befestigungsöffnung 57 bzw. 69 ein Innengewinde auf, in die die korrespondierende Schraube eingeschraubt ist. Somit entfallen die Muttern.

Zum Anbringen der Komponente 30 und des Montageteils 40 aneinander ist wiederum ein Rastmechanismus vorgesehen. Das Montageteil 40 weist an den einander zugewandten Innenflächen 58 zwei Paare von Rastvorsprüngen 48 auf. Diese zwei Paare erstrecken sich aufeinander zu. Vorteilhafterweise verfügen die Rastvorsprünge 48 über Anlaufschrägen 52. Die Anlaufschrägen 52 verlaufen in Montagerichtung R gesehen in Richtung unmittelbar angrenzender Innenfläche 58. Somit wird der Abstand der Paare von Rastvorsprüngen 52 zueinander in Richtung R größer. Die Rastvorsprünge 48 haben zur Vorderseite bzw. Anschlagfläche 45 einen Abstand a.

Die Komponente 30 weist an zu den Rastvorsprüngen 48 korrespondierenden Stellen Rastvorsprünge 32 auf. Diese erstrecken sich entgegengesetzt zur Richtung R, also in Richtung Montageteil 40 bzw. Tragring 60. Die freien Enden der Rastvorsprünge 32 sind in Richtung korrespondierendem Rastvorsprung 48 verdickt ausgebildet. Diese Verdickungen bilden Rastwölbungen 37, die im Montagezustand den korrespondierenden Rastvorsprung 48 hintergreifen bzw. von diesem hintergriffen werden. D. h. jede Rastwölbung 37 ist in dem Raum angeordnet, der durch den Abstand a des korrespondierenden Rastvorsprungs 48 zur Fläche 45 definiert wird bzw. dadurch gebildet ist. Die Rastwölbungen 37 weisen also in Richtung jeweils korrespondierendem Rastvorsprung 48 des Montageteils 40. Die Rastwölbungen 37 weisen, in Richtung R gesehen, eine jeweilige Tiefe t auf, die vorzugsweise kleiner oder gleich dem Abstand a ist. Dadurch steht die Komponente 30 im Montagezustand nicht über die Fläche 45 hervor und kann daher die Montage einer Abdeckung 20 bzw. des Tragrings 60 nicht behindern. Die Rastwölbungen 37 der Rastvorsprünge 32 haben zur sonstigen Komponente 30 einen Abstand c. Der Abstand c ist so bemessen, dass die jeweils zusammengehörenden bzw. miteinander korrespondierenden Rastvorsprünge 32, 48 nunmehr in Bezug auf die Komponente 30 einander im Montagezustand sicher hintergreifen.

Bei der Montage werden die Komponente 30 und das Montageteil 40 entlang der Richtung R zusammen geschoben. Gelangen die Rastvorsprünge 32 mit ihren Rastwölbungen 37 in den Bereich der Rastvorsprünge 48, werden sie von den Anlaufschrägen 52 weg gedrängt. Haben die Rastwölbungen 37 den jeweiligen korrespondierenden Rastvorsprung 48 überwunden, schnappt der betreffende Rastvorsprung 32 zurück. In diesem Zustand steht die jeweilige Paarung miteinander korrespondierender Vorsprünge 32, 48 im Eingriff, sodass Komponente 30 und Montageteil 40 aneinander befestigt sind und so ein Komponente-Montageteil-Modul 30, 40 bzw. mit montiertem Tragring 60 ein Komponente-Montageteil-Tragring-Modul 30, 40, 60 bilden.

Die Erfindung ist nicht auf die vorbeschriebenen Ausführungsformen beschränkt. Sie können beispielsweise so miteinander kombiniert sein, dass ein Montageteil 40 sowohl mit Vorsprüngen 46, 47 als auch mit Laschen 56 ausgebildet ist. D. h. das Montageteil 40 ist sowohl für die Komponente 30 gemäß Figur 1 als auch für eine sonst an einem Tragring festgeschraubte oder genietete Komponente geeignet (vgl. Figur 9). Im Fall der Komponente 30 müssten die Laschen 56 nur entfernt werden. Dies kann realisiert werden, indem die Laschen 56 an der zugehörigen Fläche 41 des Montageteils 40 beispielsweise mittels Schrauben angebracht ist. Oder aber die Laschen 56 weisen in ihren Anformungsbereichen in Bezug auf die jeweilige Fläche 41 eine Sollbruchstelle auf. So können die Laschen 56 hier in Montagerichtung R einfach abgeknickt und vom übrigen Montageteil 40 abgetrennt werden.

Das Montageteil 40 kann für die anzubringende Komponente 30 und für den Tragring 60 über jedwede andere Befestigungsmöglichkeit verfügen, solange die Komponente 30 und der Tragring 60 jeweils ausschließlich am Montageteil 40 angebracht sind. Auch die gesamte Form des Montageteils 40 kann variieren, solange es über Befestigungsmöglichkeiten sowohl für einen Tragring 60 als auch für eine Komponente 30 verfügt. Das Montageteil 40 kann mehrteilig ausgebildet sein, wobei zumindest ein Teil der Befestigung eines Tragrings 60 dient, wohingegen zumindest ein anderes Teil der Befestigung einer Komponente 30 dient.

Die vorbeschriebenen Montageteile 40 können außenseitig so ausgebildet sein, dass sie selbst haltend oder mithilfe zusätzlicher Befestigungsmittel bzw. -vorrichtungen wie Schrauben, Federelementen und dergleichen in korrespondierende Ausnehmungen von zumindest im Bereich des Montageteils innen hohlen Wandungselementen ortsfest eingesetzt werden können. Wandungselemente können innen hohle feststehende oder bewegliche Rahmenprofile beispielsweise von Fassaden oder Türflügeln sein oder mittels Gebäudewänden oder dergleichen gebildet sein. Dies hat den Vorteil, dass weder die Komponente 30 noch der Tragring 60 zur Montage an solch einem Wandungselement ausgebildet sein muss. Dadurch können nahezu alle Arten von Tragringen 60 und Komponenten 30 an solch einem Wandungselement angebracht werden.

Alternativ oder zusätzlich kann das Montageteil 40 so ausgebildet sein, dass es die Komponente 30 zumindest teilweise umgibt. Dies hat den Vorteil, dass das Montageteil 40 ein (zusätzlichen) mechanischen Schutz der Komponente 30 bietet. Im Extremfall umgibt das Montageteil 40 die Komponente 30 vollständig. In diesem Fall ist das Montageteil 40 vorzugsweise mehrteilig ausgebildet und kann zu einem in sich nahezu vollständig geschlossenen Gehäuse zusammengesetzt werden.

Im Ergebnis ist durch die Erfindung eine einfache Möglichkeit geschaffen, eine eigentlich an einem Tragring zu befestigende, Unterputz und/oder Aufputz zu montierende Komponente jeweils ausschließlich an einem Montageteil zu befestigen, das seinerseits am Tragring befestigt wird. Das Montageteil 40 ermöglicht eine nahezu unbegrenzte Kombinierbarkeit von Komponenten 30 mit Tragringen 60 und damit mit Abdeckungen 20, solange Komponente 30 und Abdeckung 20 funktional miteinander kombiniert werden können.

Auch kann die Erfindung ohne Weiteres mit der aus der DE 37 38 776 A1 bekannten Lösung kombiniert werden.

### Bezugszeichenliste

- 1: Einsatz

- 10: Unterputzdose
- 11: Befestigungsdom
- 12: Kabeldurchführung
- 13: Gewindeöffnung

- 20: Abdeckung
- 21: Rahmenteil
- 22: Innenteil
- 23: Rastvorsprung
- 24: Ausnehmung
- 25: Auflagefläche
- 26: Vorsprung
- 27: Seitenfläche
- 28: Führungsfläche
- 29: Auflagefläche

- 30: Komponente
- 31: Auflageabschnitt
- 32: Rastvorsprung
- 33: Anschlagfläche
- 34: Führungsnut
- 35: Führungsfläche
- 36: Anlaufschräge
- 37: Rastwölbung
- 40: Montageteil
- 41: Führungsfläche
- 42: Rastzunge
- 43: Vorsprung
- 44: Aufnahmeabschnitt
- 45: Anschlagfläche
- 46: Führungsvorsprung
- 47: Führungsvorsprung
- 48: Rastvorsprung
- 49: Ausnehmung
- 50: Ausnehmung
- 51: Auflagefläche
- 52: Anlaufschräge
- 53: Rastspitze
- 54: Anlaufschräge
- 55: Wandabschnitt
- 56: Lasche
- 57: Befestigungsöffnung
- 58: Innenfläche
- 59: Außenseite, -fläche

- 60: Tragring
- 61: Schraubloch
- 62: Schraubloch
- 63: Randabschnitt
- 64: Vorsprung
- 65: Eckausnehmung
- 66: Vorsprung
- 67: Fläche
- 68: Lasche
- 69: Befestigungsöffnung

- R: Richtung

- a: Abstand
- b: Abstand
- c: Abstand
- d: Dicke
- t: Tiefe

- Si;i ∈ N: Schritt

## Patentansprüche

1. Montageteil (40), gestaltet,
• mit einer ersten Befestigungsvorrichtung (42 - 44, 56) an einem Tragring (60) eines Einsatzes (1) ortsfest angebracht zu werden, welcher Tragring (60) gestaltet ist, Unterputz und/oder Aufputz montiert zu werden, und
• mit einer zweiten Befestigungsvorrichtung (46 - 48) an einer korrespondierenden Befestigungsvorrichtung (31, 32) einer Komponente (30) ortsfest angebracht zu werden, die gestaltet ist, an einem korrespondierend ausgebildeten Tragring befestigt zu werden, der ebenfalls gestaltet ist, Unterputz und/oder Aufputz montiert zu werden.

2. Montageteil (40) gemäß Anspruch 1, wobei
• die erste Befestigungsvorrichtung (42 - 44, 56)
- zumindest zum Teil mittels einer Außenkontur (59) gebildet bzw. an dieser ausgebildet ist und
- in Längserstreckung des Montageteils (40) gesehen, gestaltet ist, in eine korrespondierende Innenkontur (64, 66, 68) des einen Tragrings (60) als zumindest ein Teil der korrespondierenden Befestigungsvorrichtung (31, 32) derart eingeschoben zu werden, dass das Montageteil (40) kraft- und/oder formschlüssig am Tragring (60) gehaltert ist, und
• die zweite Befestigungsvorrichtung (46 - 48) zumindest zum Teil mittels einer Innenkontur (41, 46 - 48) gebildet ist, gestaltet, die Komponente (30) kraft- und/oder formschlüssig zu haltern.

3. Montageteil (40) gemäß Anspruch 2, aufweisend an seiner Außen-und/oder Innenkontur (41, 46 - 48, 59) jeweils
• Befestigungsabschnitte (42, 43, 56), gestaltet, das Montageteil (40) am Tragring (60) bzw. an der Komponente (30) zu fixieren, sowie
• eine Verdrehsicherung (43, 46 - 48, 59), gestaltet, ein Verdrehen des Montageteils (40) in Bezug auf den Tragring (60) bzw. die Komponente (30) um eine Achse entlang einer Einschubrichtung (R) des Montageteils (40) in Bezug auf den Tragring (60) bzw. die Komponente (30) zu verhindern.

4. Montageteil (40) gemäß Anspruch 3, wobei zumindest einer der Befestigungsabschnitte (42, 43) des Montageteils (40) gestaltet ist, das Montageteil (40) mit dem Tragring (60) bzw. der Komponente (30) zu verrasten und/oder zu verklemmen.

5. Montageteil (40) gemäß Anspruch 4, wobei einer des zumindest einen Befestigungsabschnitts (42, 43) des Montageteils (40) mittels einer Rastnase (42, 43) gebildet ist, die im Montagezustand, entgegen einer Demontagerichtung in Bezug auf den korrespondierenden Tragring (60) bzw. die korrespondierende Komponente (30) gesehen, den Tragring (60) bzw. die Komponente (30) rastend hintergreift.

6. Montageteil (40) gemäß Anspruch 4 oder 5, wobei einer des zumindest einen Befestigungsabschnitts des Montageteils (40) mittels einer Rastausnehmung gebildet ist, die, entgegen einer Demontagerichtung in Bezug auf den Tragring (60) bzw. die Komponente (30) gesehen, vom Tragring (60) bzw. von der Komponente (30) hintergriffen wird.

7. Montageteil (40) gemäß einem der vorhergehenden Ansprüche, ferner gestaltet, in ein Wandungselement ortsfest eingesetzt oder an diesem angebracht zu werden, wobei das Wandungselement in einem korrespondierenden Einsetz- bzw. Anbringabschnitt eine Ausnehmung zur Aufnahme des Montageteils (40) aufweist.

8. Einsatz (1),
• aufweisend
- einen Tragring (60) gemäß Anspruch 1,
- eine auf bzw. in den Tragring (60) ortsfest auf- bzw. einsetzbar gestaltete Abdeckung (20),
- ein Montageteil (40) gemäß einem der vorhergehenden Ansprüche, das über seine erste Befestigungsvorrichtung (42 - 44, 56) an dem Tragring (60) ortsfest angebracht ist, und
- eine Komponente (30) gemäß Anspruch 1,
• wobei das Montageteil (40) über seine zweite Befestigungsvorrichtung (46 - 48) an der korrespondierenden Befestigungsvorrichtung (31, 32) der Komponente (30) ortsfest angebracht ist.

9. Einsatz (1) gemäß Anspruch 8, wobei
• der Tragring (60), die Komponente (30) und das Montageteil (40) gemäß Anspruch 2 ausgebildet sind,
• das Montageteil (40) über seine Außenkontur (59) (42 - 44, 56) an der korrespondierenden Innenkontur (64, 66, 68) des Tragrings (60) ortsfest angebracht ist, und
• die Komponente (30) von der Innenkontur (46 - 48) des Montageteils (40) ortsfest gehaltert ist.

10. Einsatz (1) gemäß Anspruch 8 oder 9, wobei
• die Abdeckung (20) ein Rahmenteil (21) und ein darin eingesetztes Innenteil (22) aufweist und
• das Rahmenteil (21)
- zwischen Innenteil (22) und Tragring (60) angeordnet ist und
- von der Anordnung Innenteil (22) und Tragring (60) in seiner Montageposition fixiert ist.

11. Verfahren zum Montieren eines Einsatzes (1) gemäß einem der Ansprüche 8 bis 10, aufweisend die Schritte:
• als zwei erste Schritte (S2, S3):
- ortsfestes Anbringen der Komponente (30) am Montageteil (40) und
- ortsfestes Anbringen des Tragrings (30) am Montageteil (40),
• Anbringen (S4) des so gebildeten Moduls (30, 40, 60) mithilfe des Tragrings (60) an einer Unterputzdose (10) oder einem Aufputzgehäuse und
• ortsfestes Anbringen (S5) der Abdeckung (20) auf bzw. in dem Tragring (60) oder am Montageteil (40).

12. Verfahren gemäß Anspruch 11, wobei der Schritt (S2, S3) des ortsfesten Anbringens der Komponente (30) und/oder des Tragrings (60) am Montageteil (40) erfolgt, indem die Komponente (30) bzw. der Tragring (60)
• und das Montageteil (40) zusammen geschoben werden und
• am Ende des Zusammenschiebens aufgrund eines kraft- und/oder formschlüssigen Eingriffs mit dem Montageteil (40) automatisch an dem Montageteil (40) zumindest vorfixiert ist.
